# EUROPÄISCHE PATENTSCHRIFT

(11) **EP 3 012 272 B1**
(45) Veröffentlichungstag und Bekanntmachung des Hinweises auf die Patenterteilung: **15.11.2017**
(21) Anmeldenummer: 15187701.6
(22) Anmeldetag: 30.09.2015
(51) Int. Cl.: C08F 8/30, B01J 41/12, B01J 45/00, C08F 8/12

(54) **VERFAHREN ZUR HERSTELLUNG VON AMINOMETHYLIERTEN PERLPOLYMERISATEN**
METHOD FOR THE PRODUCTION OF AMINOMETHYLATED BEAD POLYMERS
PROCEDE DE FABRICATION DE POLYMERES EN PERLES AMINOMETHYLEES

(30) Priorität: 21.10.2014 EP 14189673
(43) Veröffentlichungstag der Anmeldung: 27.04.2016
(73) Patentinhaber: LANXESS Deutschland GmbH, 50569 Köln (DE)
(72) Erfinder: KLIPPER, Reinhold, 50933 Köln (DE); VANHOORNE, Pierre, 40789 Monheim (DE)

(56) Entgegenhaltungen:
- DE-A1- 2 161 628
- US-A- 3 882 053

## Beschreibung

Die Erfindung betrifft ein Verfahren zur Herstellung von aminomethylierten Perlpolymerisaten.

Aus der DE-A 3733033, der US-B 7053129 oder der US-A 3925264 ist ein Verfahren zur Herstellung von aminomethylierten Perlpolymerisaten bekannt, bei dem Phthalimid in Gegenwart von Formaldehyd und in Gegenwart von Basen und Quellungsmitteln, insbesondere in 1,2-Dichlorethan, in N-Hydroxymethylphthalimid überführt wird, welches in einem weiteren Schritt säurekatalytisch zum Bis(phthalimidomethyl)ether umgesetzt wird. Dieser Ether wird in Gegenwart von Friedel-Crafts Katalysatoren, insbesondere in Gegenwart von starken Säuren, mit dem Perlpolymerisat zum phthalimidomethylierten Perlpolymerisat umgesetzt. Das phthalimidomethylierte Perlpolymerisat wird dann alkalisch zum aminomethylierten Perlpolymerisat hydrolysiert.

Ein weiteres Verfahren zur Herstellung von aminomethylierten Perlpolymerisaten ist aus der US-A 4232125 und der PCT/EP2014/067109 bekannt, bei dem Phthalimid und Paraformaldehyd und das Perlpolymerisat, ebenfalls in Gegenwart von 1,2-Dichlorethan als Quellungsmittel, zusammen mit Schwefelsäure als Friedel-Crafts Katalysator in einer Eintopfreaktion, bei der als Intermediat das Carboniumion des Methylphthalimids gebildet wird, zum pthalimidomethylierten Perlpolymerisat umgesetzt wird. Das phthalimidomethylierte Perlpolymerisat wird dann alkalisch zum aminomethylierten Perlpolymerisat hydrolysiert.

Nachteilig an den vorgenannten Verfahren ist, dass die Ausbeuten nicht zufriedenstellend sind.

Es bestand daher ein Bedürfnis nach einem Verfahren bei dem unter hohen Ausbeuten aminomethylierte Perlpolymerisate hergestellt werden können.

Überraschend wurde gefunden, dass unter Verwendung von 1,3-Dichlorpropan höhere Ausbeuten an aminomethylierten Perlpolymerisaten erzielt werden können.

Gegenstand der Erfindung ist daher ein Verfahren zur Herstellung von aminomethylierten Perlpolymerisaten, dadurch gekennzeichnet, dass
a) Monomertröpfchen aus einem Gemisch enthaltend mindestens eine monoethylenisch ungesättigte, aromatische Verbindung, mindestens eine multiethylenisch ungesättigte Verbindung, mindestens einen Initiator zu einem Perlpolymerisat umgesetzt werden und
b) das Perlpolymerisat aus Schritt a) mit Verbindungen der Formel (I) oder deren Salze 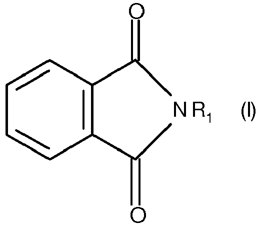 wobei R₁ = C₁-C₃-Alkyl oder H und Verbindungen der Formel (II) 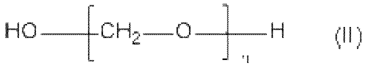 wobei n = 1 bis 100 ist,
   in Gegenwart von 1,3-Dichlorpropan und
   in Gegenwart von Protonensäuren
   zu einem phthalimidomethyliertem Perlpolymerisat umgesetzt wird und
c) das phthalimidomethylierte Perlpolymerisat zu einem aminomethylierten Perlpolymerisat hydrolysiert wird.

R₁ stellt bevorzugt H dar. Falls R₁ = H ist, dann ist die Verbindung der Formel (I) Phthalimid. Verbindungen der Formel (I) sind bevorzugt Phthalimid und dessen Salze. Als solche können z.B. die Addukte mit Salzsäure oder Schwefelsäure verstanden werden. Bevorzugt stellen die Salze der Verbindungen der Formel (I) quarternäre Phthalimidaddukte aus Phthalimid und Schwefelsäure dar.

Bevorzugt ist n = 8 bis 100. Besonders bevorzugt ist n = 8 bis 15. Für den Fall, dass n = 1 sind die Verbindungen der Formel (II) Formaldehyd.

Die Verbindungen der Formel (II) können linear sein oder aber auch zyklische Kondensate des Formaldehyds, also z.B. auch Trioxan darstellen. Besonders bevorzugt werden als Verbindungen der Formel (II) Formaldehyd, Paraformaldehyd oder Trioxan oder Gemische dieser Verbindungen eingesetzt. Besonders bevorzugt sind die Verbindungen der Formel (II) Formaldehyd und Paraformaldehyd mit n = 8 bis 100. Ganz besonders bevorzugt ist die Verbindung der Formel (II) Paraformaldehyd mit n = 8 bis 100.

Als Protonensäuren können beispielsweise anorganische oder organische Protonensäuren eingesetzt werden. Als anorganische Protonensäuren werden beispielsweise Salzsäure, Schwefelsäure, Oleum, Salpetersäure, salpetrige Säure, schwefelige Säure oder Phosphorsäure eingesetzt. Als organische Protonensäuren können z.B. Oxalsäure oder Ameisensäure eingesetzt werden. Bevorzugt werden anorganische Protonensäuren eingesetzt. Besonders bevorzugt werden als Protonensäuren Schwefelsäure, Salzsäure oder Oleum eingesetzt. Noch weiter bevorzugt wird Schwefelsäure eingesetzt.

Der Rahmen der Erfindung umfasst alle oben stehenden und im Folgenden aufgeführten, allgemeinen oder in Vorzugsbereichen genannten Restedefinitionen, Parameter und Erläuterungen untereinander, also auch zwischen den jeweiligen Bereichen und Vorzugsbereichen in beliebiger Kombination.

In Verfahrensschritt a) wird wenigstens eine monovinylaromatische Verbindung und wenigstens eine polyvinylaromatische Verbindung eingesetzt. Es ist jedoch auch möglich, Mischungen zweier oder mehrerer monovinylaromatischer Verbindungen und Mischungen zweier oder mehrerer polyvinylaromatischer Verbindungen einzusetzen.

Als monovinylaromatische Verbindungen im Sinne der vorliegenden Erfindung werden in Verfahrensschritt a) bevorzugt Styrol, Vinyltoluol, Ethylstyrol, α-Methylstyrol, Chlorstyrol, Chlormethylstyrol, Acrylsäurealkylester oder Methacrylsäurealkylester, eingesetzt.

Insbesondere bevorzugt wird Styrol oder Mischungen aus Styrol mit den vorgenannten Monomeren, bevorzugt mit Ethylstyrol, eingesetzt.

Bevorzugte polyvinylaromatische Verbindungen im Sinne der vorliegenden Erfindung sind für Verfahrensschritt a) Divinylbenzol, Divinyltoluol, Trivinylbenzol, Divinylnaphtalin, Trivinylnaphtalin, 1,7-Octadien, 1,5-Hexadien, Ethylenglycoldimethacrylat, Trimethylolpropantrimethacrylat oder Allylmethacrylat, insbesondere bevorzugt Divinylbenzol.

Die polyvinylaromatischen Verbindungen werden bevorzugt in Mengen von 1-20 Gew.-%, besonders bevorzugt 2-12 Gew.-%, insbesondere bevorzugt 4-10 Gew.-%, bezogen auf das Monomer oder dessen Mischung mit weiteren Monomeren eingesetzt. Die Art der polyvinylaromatischen Verbindungen (Vernetzer) wird im Hinblick auf die spätere Verwendung des Perlpolymerisats ausgewählt. Im Falle des Einsatzes von Divinylbenzol sind kommerzielle Divinylbenzolqualitäten, die neben den Isomeren des Divinylbenzols auch Ethylvinylbenzol enthalten, ausreichend.

Der Begriff Perlpolymerisat stellt im Sinne der Erfindung ein kugelförmiges, vernetztes Polymerisat dar.

Die Begriffe mikroporös oder gelförmig bzw. makroporös sind in der Fachliteratur bereits eingehend beschrieben worden.

Die Ausbildung makroporöser Perlpolymerisate erfolgt durch Zusatz von Inertmaterialien, bevorzugt wenigstens einem Porogen, zu der Monomermischung bei der Polymerisation, um im Perlpolymerisat eine makroporöse Struktur zu erzeugen. Insbesonders bevorzugte Porogene sind Hexan, Octan, Isooctan, Isododecan, Methylethylketon, Butanol oder Octanol und deren Isomeren. Es sind vor allem organische Substanzen geeignet, die sich im Monomeren lösen, das Perlpolymerisat aber schlecht lösen bzw. quellen (Fällmittel für Polymere) beispielsweise aliphatische Kohlenwasserstoffe (Farbenfabriken Bayer DBP 1045102 , 1957; DBP 1113570, 1957).

In US 4382124 werden als Porogen die ebenfalls im Rahmen der vorliegenden Erfindung bevorzugt einzusetzende Alkohole mit 4 bis 10 Kohlenstoffatomen zur Herstellung monodisperser, makroporöser Perlpolymerisate auf Styrol/Divinylbenzol-Basis eingesetzt. Ferner wird eine Übersicht der Herstellmethoden makroporöser Perlpolymerisate gegeben.

Bevorzugt wird in Verfahrensschritt a) mindestens ein Porogen zugesetzt. Bevorzugt weisen die aminomethylierten Perlpolymerisate eine makroporöse Struktur auf.

Die gemäß Verfahrensschritt a) hergestellten Perlpolymerisate können in heterodisperser oder monodisperser Form hergestellt werden.

Die Herstellung heterodisperser Perlpolymerisate geschieht nach allgemeinen, dem Fachmann bekannten Verfahren, z.B. mit Hilfe der Suspensionspolymerisation.

Bevorzugt werden monodisperse Perlpolymerisate in Verfahrensschritt a) hergestellt.

Als monodispers werden in der vorliegenden Anmeldung solche Stoffe bezeichnet, bei dem mindestens 90 Volumen- oder Massen-% der Teilchen einen Durchmesser besitzen, der in dem Intervall mit der Breite von + 10 % des häufigsten Durchmessers um den häufigsten Durchmesser herum liegt.

Zum Beispiel bei einem Stoff mit häufigstem Durchmesser von 0,5 mm liegen mindestens 90-Volumen- oder Massen-% in einem Größenintervall zwischen 0,45 mm und 0,55 mm, bei einem Stoff mit häufigstem Durchmesser von 0,7 mm liegen mindestens 90 Volumen- oder Massen-% in einem Größenintervall zwischen 0,77 mm und 0,63 mm.

In einer bevorzugten Ausführungsform der vorliegenden Erfindung kommen in Verfahrensschritt a) mikroverkapselte Monomertröpfchen bei der Herstellung von monodispersen Perlpolymerisaten zum Einsatz.

Für die Mikroverkapselung der Monomertröpfchen kommen die für den Einsatz als Komplexkoazervate bekannten Materialien in Frage, insbesondere Polyester, natürliche und synthetische Polyamide, Polyurethane oder Polyharnstoffe.

Als natürliches Polyamid wird bevorzugt Gelatine eingesetzt. Diese kommt insbesondere als Koazervat und Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Besonders bevorzugt werden Acrylsäure und Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP-A 0 046 535 eingehend beschrieben. Die Methoden der Verkapselung mit synthetischen Polymeren sind bekannt. Bevorzugt ist die Phasengrenzflächenkondensation, bei der eine im Monomertröpfchen gelöste Reaktivkomponente (insbesondere ein Isocyanat oder ein Säurechlorid) mit einer zweiten, in der wässrigen Phase gelösten Reaktivkomponente (insbesondere einem Amin), zur Reaktion gebracht wird.

Die gegebenenfalls mikroverkapselten, monodispersen Monomertröpfchen enthalten wenigstens einen Initiator oder Mischungen von Initiatoren (Initiatorkombination) zur Auslösung der Polymerisation. Für das erfindungsgemäße Verfahren bevorzugte Initiatoren sind Peroxyverbindungen, insbesondere bevorzugt Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-ethylhexan, sowie Azoverbindungen wie 2,2'-Azo-bis(isobutyronitril) oder 2,2'-Azobis(2-methylisobutyronitril).

Die Initiatoren werden bevorzugt in Mengen von 0,05 bis 2,5 Gew.-%, besonders bevorzugt 0,1 bis 1,5 Gew.-%, bezogen auf die Monomeren-Mischung, angewendet.

Das gegebenenfalls, monodispersen, mikroverkapselte Monomertröpfchen kann gegebenenfalls auch bis zu 30 Gew.-% (bezogen auf das Monomer) vernetztes oder unvernetztes Polymer enthalten. Bevorzugte Polymere leiten sich aus den vorgenannten Monomeren, besonders bevorzugt von Styrol, ab.

Bei der Herstellung von monodispersen Perlpolymerisaten in Verfahrensschritt a) kann die wässrige Phase in einer weiteren bevorzugten Ausführungsform einen gelösten Polymerisationsinhibitor enthalten. Als Inhibitoren kommen in diesem Fall sowohl anorganische als auch organische Stoffe in Frage. Bevorzugte anorganische Inhibitoren sind Stickstoffverbindungen, insbesondere bevorzugt Hydroxylamin, Hydrazin, Natriumnitrit und Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid und Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol und Kondensationsprodukte aus Phenolen mit Aldehyden. Weitere bevorzugte organische Inhibitoren sind stickstoffhaltige Verbindungen. Insbesondere bevorzugt sind Hydroxylaminderivate wie beispielsweise N,N-Diethylhydroxylamin, N-Isopropylhydroxylamin sowie sulfonierte oder carboxylierte N-Alkylhydroxylamin- oder N,N-Dialkylhydroxylaminderivate, Hydrazinderivate wie beispielsweise N,N-Hydrazinodiessigsäure, Nitrosoverbindungen wie beispielsweise N-Nitrosophenylhydroxylamin, N-Nitrosophenylhydroxylamin-Ammoniumsalz oder N-Nitrosophenylhydroxylamin-Aluminiumsalz. Die Konzentration des Inhibitors beträgt 5 - 1000 ppm (bezogen auf die wässrige Phase), vorzugsweise 10 - 500 ppm, besonders bevorzugt 10 - 250 ppm.

Die Polymerisation der gegebenenfalls mikroverkapselten monodispersen, Monomertröpfchen zum monodispersen Perlpolymerisat erfolgt, wie bereits oben erwähnt, gegebenenfalls bzw. bevorzugt in Anwesenheit eines oder mehrerer Schutzkolloide in der wässrigen Phase. Als Schutzkolloide eignen sich natürliche oder synthetische wasserlösliche Polymere, bevorzugt Gelatine, Stärke, Polyvinylalkohol, Polyvinylpyrrolidon, Polyacrylsäure, Polymethacrylsäure oder Copolymerisate aus (Meth)acrylsäure und (Meth)acrylsäureestern. Bevorzugt sind ferner Cellulosederivate, insbesondere Celluloseester und Celluloseether, wie Carboxymethylcellulose, Methylhydroxyethylcellulose, Methylhydroxypropylcellulose und Hydroxyethylcellulose. Insbesondere bevorzugt ist Gelatine. Die Einsatzmenge der Schutzkolloide beträgt im allgemeinen 0,05 bis 1 Gew.-% bezogen auf die wässrige Phase, vorzugsweise 0,05 bis 0,5 Gew.-%.

Die Polymerisation zum monodispersen Perlpolymerisat kann in einer alternativen bevorzugten Ausführungsform in Anwesenheit eines Puffersystems durchgeführt werden. Bevorzugt werden Puffersysteme, die den pH-Wert der wässrigen Phase bei Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phosphats bzw. Borat in der wässrigen Phase beträgt 0,5 - 500 mmol/l, vorzugsweise 2,5 - 100 mmol/l.

Die Rührgeschwindigkeit bei der Polymerisation zum monodispersen Perlpolymerisat ist weniger kritisch und hat im Gegensatz zur herkömmlichen Perlpolymerisation keinen Einfluss auf die Teilchengröße. Es werden niedrige Rührgeschwindigkeiten angewandt, die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von verkapselten Monomertröpfchen zu wässriger Phase beträgt 1 : 0,75 bis 1 : 20, vorzugsweise 1 : 1 bis 1 : 6.

Die Polymerisationstemperatur zum monodispersen Perlpolymerisat richtet sich nach der Zerfallstemperatur des eingesetzten Initiators. Sie liegt im Allgemeinen zwischen 50 und 180°C, vorzugsweise zwischen 55 und 130°C. Die Polymerisation dauert 0,5 bis etwa 20 Stunden. Es hat sich bewährt, ein Temperaturprogramm anzuwenden, bei dem die Polymerisation bei niedriger Temperatur, beispielsweise 60°C begonnen wird und die Reaktionstemperatur mit fortschreitendem Polymerisationsumsatz gesteigert wird. Auf diese Weise lässt sich beispielsweise die Forderung nach sicherem Reaktionsverlauf und hohem Polymerisationsumsatz sehr gut erfüllen. Nach der Polymerisation wird das monodisperse Perlpolymerisat mit üblichen Methoden, beispielsweise durch Filtrieren oder Dekantieren, isoliert und gegebenenfalls gewaschen.

Die Herstellung der monodispersen Perlpolymerisate mit Hilfe des Jetting Prinzipes oder des Seed-Feed-Prinzip ist aus dem Stand der Technik bekannt und z.B. in US-A 4 444 961, EP-A 0 046 535, US 4 419 245 oder WO 93/12167 beschrieben.

Bevorzugt erfolgt die Herstellung der monodispersen Perlpolymerisate mit Hilfe des Jetting Prinzipes oder des Seed-Feed-Prinzip.

Bevorzugt wird in Verfahrensschritt a.) ein makroporöses, monodisperses Perlpolymerisat hergestellt.

1,3-Dichlorpropan stellt ein Quellmittel für die Perlpolymerisate dar, dient aber ebenfalls als Lösungsmittel für die weiteren Edukte der Amidierungsreaktion und stellt daher ein Lösungs- und Quellungsmittel im Sinne der Erfindung dar. In Verfahrensschritt b) können auch weitere organische Lösungs- und Quellungsmittel zugesetzt werden. Als weitere organische Lösungs- und Quellungsmittel können z.B. 1,2-Dichlorethan, 1,2-Dichlorpropan, 1,4-Dichlorbutan, 1,6-Dichlorhexan, Methylenchlorid, Tetrachlorkohlenstoff, Trichlorethan, Chlorbenzol, 1,2-Dichlorbenzol, oder Nitro- substituierte Kohlenwasserstoffe, wie z.B. Nitropropan, Nitrobenzol oder z.B. cyclische Kohlenwasserstoffe, wie z.B. Cyclohexan und Methylcyclohexan zugesetzt werden. Bevorzugt werden keine weiteren organischen Lösungs- und Quellungsmittel in Verfahrensschritt b.) eingesetzt.

Im Allgemeinen ist der Anteil von 1,3-Dichlorpropan an eingesetzten organischen Lösungs- und Quellungsmitteln größer als 90 Gew. %, er kann aber auch kleiner sein. Bevorzugt ist der Anteil von 1,3-Dichlorpropan an eingesetzten organischen Lösungs- und Quellungsmitteln in Verfahrensschritt b.) größer als 90 Gew. %. Besonders bevorzugt ist der Anteil von 1,3-Dichlorpropan an eingesetzten organischen Lösungs- und Quellungsmitteln in Verfahrensschritt b.) größer als 95 Gew. %. Ganz besonders bevorzugt ist der Anteil von 1,3-Dichlorpropan an eingesetzten organischen Lösungs- und Quellungsmitteln in Verfahrensschritt b.) größer 98 Gew.%.

Verfahrensschritt b) wird im Allgemeinen bei Temperaturen zwischen 40 und 80 °C durchgeführt, kann aber ebenfalls bei geringeren oder höheren Temperaturen durchgeführt werden. Bevorzugt wird Verfahrensschritt b) bei Temperaturen zwischen 55 °C und 75 °C durchgeführt.

Verfahrensschritt b) kann in unterschiedlicher Art und Weise durchgeführt werden. Z. B. könnte zunächst das Amidomethylierungsreagens hergestellt werden. Dazu werden die Verbindungen der Formel (I) in 1,3-Dichlorpropan oder in Mischungen dieses Lösungs- und Quellungsmittels mit weiteren Lösungs- und Quellungsmitteln gelöst und mit Verbindungen der Formel (II) versetzt. Anschließend wird unter Wasserabspaltung hieraus ein Ether gebildet. Dieser Ether kann gegebenenfalls zum Ester umgesetzt werden. Im Verfahrensschritt b) wird das Perlpolymerisat mit Verbindungen der Formel (II) kondensiert. Als Katalysator werden hierbei Protonensäuren eingesetzt. Bevorzugt wird Schwefelsäure als Protonensäure eingesetzt. Besonders bevorzugt wird als Protonensäure Schwefelsäuremonohydrat eingesetzt. Die Schwefelsäure wird vorzugsweise in einer Konzentration von 90 bis 102 Gew. % eingesetzt, besonders bevorzugt in einer Konzentration von 98% bis 102 Gew. %. Eine Mengenangabe über 100 Gew. % bedeutet, dass 100 Gew. % H₂SO₄ vorliegt und der zusätzliche Anteil von freiem SO₃ stammt. Demzufolge bedeutet die Angabe 102 Gew. % das 100 Gew.% H₂SO₄ vorliegt und 2 Gew. % freies SO₃.

Ebenso könnten aber ebenfalls das Perlpolymerisat zunächst aufgequollen werden und in diesem Zustand mit einer Mischung aus den Verbindungen der Formel (I) und den Verbindungen der Formel (II) und den Protonensäuren vermischt werden. Genauso könnte aber zunächst die Verbindungen der Formel (I) zu dem Perlpolymerisat in Gegenwart von 1,3-Dichlorpropan hinzugegeben werden und danach die Verbindung der Formel (II) und dann die Protonensäuren hinzugefügt werden. Bevorzugt wird zunächst das Perlpolymerisat in Gegenwart von 1,3-Dichlorpropan und gegebenenfalls weiteren Lösung- und Quellungsmitteln aufgequollen und dann die Verbindungen der Formel (I) und die Verbindungen der Formel (II) hinzugegeben und dann die Protonensäure hinzugefügt, wenn als Verbindung der Formel (II) Paraformaldehyd eingesetzt wird. Bevorzugt wird die Reaktionsmischung erwärmt. Bevorzugt erfolgt die Herstellung des pthhalimidomethylierten Perlpolymerisates über die Zwischenstufe der Herstellung eines Amidomethylierungsreagenz, wenn als Verbindung der Formel (II) Formaldehyd eingesetzt wird. Die Abtrennung von 1,3-Dichlorpropan oder/und der möglichen weiteren zugesetzten Lösungs- und Quellungsmitteln erfolgt vorzugsweise destillativ. Die Aufarbeitung der Reaktionsprodukte erfolgt nach dem Fachmann bekannten Verfahren.

Die Menge an Verbindungen der Formel (I), die in Verfahrensschritt b) eingesetzt wird, beträgt im Allgemeinen 3,5 bis 1,7 mol pro Mol Protonensäure, kann aber auch kleiner oder größer sein. Bevorzugt werden 2 bis 2,5 mol Verbindungen der Formel (I) pro Mol Protonensäure eingesetzt.

Die Menge an 1,3-Dichlorpropan, die in Verfahrensschritt b) eingesetzt wird, beträgt im Allgemeinen 3,5 bis 13 mol pro Mol Verbindungen der Formel (I), kann aber auch kleiner oder größer sein. Bevorzugt werden 5 bis 10 mol 1,3-Dichlorpropan pro Mol Verbindungen der Formel (I) eingesetzt. Besonders bevorzugt werden 6 bis 9 mol 1,3-Dichlorpropan pro Mol Verbindungen der Formel (I) eingesetzt.

Die Menge an 1,3-Dichlorpropan, die in Verfahrensschritt b) eingesetzt wird, beträgt im Allgemeinen 7,5 bis 13 mol pro Mol Perlpolymerisat, kann aber auch kleiner oder größer sein. Bevorzugt werden 7,5 bis 12 mol 1,3-Dichlorpropan pro Mol Perlpolymerisat eingesetzt.

Im Allgemeinen erfolgt die Umsetzung des phthalimidomethylierten, Perlpolymerisates zu dem aminomethylierten Perlpolymerisat in Verfahrensschritt c.) mit wässrigen oder alkoholischen Lösungen eines Alkalihydroxids, wie Natriumhydroxid oder Kaliumhydroxid. Zudem wird Verfahrensschritt c.) im Allgemeinen bei Temperaturen zwischen 100°C und 250°C kann aber auch bei höheren oder niedrigeren Temperaturen durchgeführt werden. Vorzugsweise wird Verfahrensschritt c.) bei Temperaturen zwischen 120 °C und 190°C durchgeführt. Bevorzugt erfolgt die Umsetzung des phthalimidomethylierten, Perlpolymerisates zu dem aminomethylierten Perlpolymerisat in Verfahrensschritt c.) mit Alkali- oder Erdalkalihydroxiden oder Gemischen dieser Verbindungen, besonders bevorzugt mit Alkalihydroxiden, wie insbesondere Natriumhydroxid. Bevorzugt verläuft die Umsetzung in Verfahrensschritt c.) in Gegenwart einer wässrigen oder alkoholischen Lösung eines Alkalihydroxides. Die Konzentration der Natronlauge liegt im Bereich von 10 bis 50 Gew. %, vorzugsweise 20 bis 40 Gew. %. Das dabei entstehende aminomethylierte Perlpolymerisat wird bevorzugt mit vollentsalztem Wasser alkalifrei gewaschen, kann aber auch mit anderen wässrigen Lösungen oder nicht entsalztem Wasser behandelt werden.

Das aminomethylierte Perlpolymerisat kann als Anionenaustauscher verwendet werden oder zu Chelatharzen weiter umgesetzt werden.

Die Umsetzung der im Verfahrensschritt c) erhaltenen aminomethylierten, Perlpolymerisate zu Chelatharzen erfolgt nach gängigen, dem Fachmann bekannten Verfahren.

Z.B. kann die Herstellung von Iminodiessigsäuregruppen enthaltenen Chelatharze durch Umsetzung des aminomethylgruppenhaltigen Perlpolymerisat aus Verfahrensschritt c) in wässriger Suspension mit Chloressigsäure oder ihren Derivaten erfolgen. Ebenso ist es möglich die in Verfahrensschritt c.) erhaltenen aminomethylierten Perlpolymerisate in schwefelsaurer Suspension mit Formalin in Kombination mit P-H aciden (nach modifizierter Mannich Reaktion) Verbindungen zu Chelatharzen mit Phosphonsäuregruppen umzusetzen.

Mit Hilfe des erfindungsgemäßen Verfahrens können aminomethylierte Perlpolymerisate unter hohen Ausbeuten, bezogen auf die Menge an eingeführten Aminomethylgruppen, hergestellt werden und zudem der Einsatz von ökologisch bedenklichen Lösungs- und Quellungsmitteln reduziert oder sogar vollständig vermieden werden.

### Beispiele

### Beispiel 1

### 1.1 Herstellung des monodispersen, makroporösen Perlpolymerisates auf der Basis von Styrol, Divinylbenzol und Ethylstyrol

In einem 10 l Glasreaktor werden 3000 g vollentsalztes Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Die Mischung wird auf 25°C temperiert. Unter Rühren wird anschließend eine Mischung aus 3200 g von mikroverkapselten Monomertröpfchen mit enger Teilchengrößenverteilung aus 3,1 Gew.-% Divinylbenzol und 0,6 Gew.-% Ethylstyrol (eingesetzt als handelsübliches Isomerengemisch aus Divinylbenzol und Ethylstyrol mit 80 % Divinylbenzol), 0,4 Gew.-% Dibenzoylperoxid, 58,6 Gew.-% Styrol und 37,5 Gew.-% Isododekan (technisches Isomerengemisch mit hohem Anteil an Pentamethylheptan) gegeben, wobei die Mikrokapsel aus einem mit Formaldehyd gehärteten Komplexkoazervat aus Gelatine und einem Copolymer aus Acrylamid und Acrylsäure besteht, und 3200 g wässriger Phase mit einem pH-Wert von 12 zugesetzt. Die mittlere Teilchengröße der Monomertöpfchen beträgt 460 µm.

Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 µm-Sieb gewaschen und anschließend im Vakuum bei 80°C getrocknet. Man erhält 1893 g eines kugelförmigen Polymerisates mit einer mittleren Teilchengröße von 440 µm, enger Teilchengrößenverteilung und glatter Oberfläche.

Das Polymerisat ist in der Aufsicht kreidig weiß und weist eine Schüttdichte von ca. 440 g/l auf.

### 1.2 Herstellung eines phthalimidomethylierten monodispersen, makroporösen Perlpolymerisates

### Apparatur: 4 Liter Vierhalskolben, Dosiertrichter,Thermometer, Heizbad, Rührer

Bei Raumtemperatur werden 1190 g 1,3-Dichlorpropan vorgelegt. Dazu werden 150 g monodisperses, makroporöses Perlpolymerisat aus Beispiel 1,1 268,3 g Phthalimid und 61,4 g Paraformaldehyd (n= 8 bis 100) - 91 gew.-%ig (Rest: Wasser) dosiert. Die Suspension wird 0,5 Stunden bei Raumtemperatur gerührt. Dann wird die Suspension auf 60°C erwärmt. Bei dieser Temperatur wird 1,0 Stunden lang gerührt. Innerhalb von 2 Stunden werden dann bei 60°C 357,6 g Schwefelsäuremonohydrat dosiert. Anschließend rührt die Suspension dann 3 Stunden bei dieser Temperatur. Die warme Reaktionsbrühe wird abgesaugt. Es werden 2 Liter voll entsalztes Wasser dosiert. Destillativ werden Restmengen an 1,3-Dichlorpropan entfernt. Der Ansatz wird danach abgekühlt und das Harzvolumen bestimmt.
Volumenausbeute : 870 ml
Trockengewicht : 0,443 g pro ml Harz
Massenanteil an Stickstoff: 5,3 Gew. %

### 1.3 Herstellung eines Aminomethylgruppen haltigen monodispersen, makroporösen Perlpolymerisates

### Apparatur: 4 Liter Autoklav, Rührer, Temperaturmessung

Bei Raumtemperatur werden 489 ml voll entsalztes Wasser vorgelegt. Dazu werden 351,5 g 50 gew.-%iger Natronlauge dosiert. Unter Rühren werden 846 ml Harz hergestellt nach Beispiel 1.1. dosiert.

Die Suspension wird auf 180 °C erhitzt und weitere 5 Stunden bei dieser Temperatur gerührt. Danach wird die Suspension abgekühlt. Das erhaltene Perlpolymerisat wird über ein Sieb abgetrennt und mit voll entsalztem Wasser neutral gewaschen.
Volumenausbeute : 700 ml
Hochgerechnet auf die Gesamtausbeute an Harz aus 1.2 : 710 ml
Gesamte gebildete Basenmenge - Produkt aus HCl - Zahl und Gesamtausbeute Harz : 1675 mmol
HCl - Zahl : 2,36 mol/l
Erstsubstitution : 1,17

### 1.4 Herstellung eines Iminodiessigsäuregruppen haltigen monodispersen, makroporösen Perlpolymerisates

### Apparatur: 3 Liter Doppelmantelreaktor, Rührer, Temperaturmessung, Kühler, Dosierpumpe Prominent Dulcometer PHD mit pH Messelektrode, Messtropftrichter

402 ml Wasser werden bei Raumtemperatur vorgelegt. Dazu werden 670 ml Harz hergestellt aus Beispiel 1.3. dosiert Die Suspension wird auf 95°C erhitzt. Innerhalb von 7 Stunden werden 616,4 Gramm 80 gew.-%ige Monochloressigsäure dosiert. Dabei wird mit 50 gew.-%iger Natronlauge der pH Wert der Suspension bei 9,2 gehalten. Anschließend wird der pH Wert auf 10,2 erhöht und weitere 4 Stunden bei dieser Temperatur gerührt.

Danach wird der Ansatz abgekühlt. Die Suspension wird auf ein Sieb gegeben. Das Harz wird mit Wasser gewaschen.
Volumenausbeute eingerüttelt: 1250 ml
Totalkapazität: 2,99 mol/l
Zweitsubstitution: 1,91
Trockengewicht 18,57 g

### Vergleichsbeispiel 1

### 1.1 Herstellung von Anionenaustauschern und einem Chelatharz mit Iminoessigsäuregruppen mit dem Arbeitsmedium 1,2-Dichlorethan

### Apparatur: 4 Liter Vierhalskolben, Dosiertrichter, Thermometer, Heizbad, Rührer

Bei Raumtemperatur werden 1190 g 1,2-Dichlorethan vorgelegt. Dazu werden 150 g monodisperses, makroporöses Perlpolymerisat aus Beispiel 1,1 268,3 g Phthalimid und 61,4 g Paraformaldehyd (n= 8 bis 100) - 91 gew.-%ig (Rest: Wasser) dosiert. Die Suspension wird 0,5 Stunden bei Raumtemperatur gerührt. Dann werden Die Suspension wird auf 60°C erwärmt. Bei dieser Temperatur wird 1,0 Stunden lang gerührt. Innerhalb von 2 Stunden werden dann bei 60°C 357,6 g Schwefelsäuremonohydrat dosiert. Anschließend rührt die Suspension dann 3 Stunden bei dieser Temperatur. Die warme Reaktionsbrühe wird abgesaugt. Es werden 2 Liter voll entsalztes Wasser dosiert. Destillativ werden Restmengen an 1,2-Dichlorethan entfernt. Der Ansatz wird danach abgekühlt und das Harzvolumen bestimmt.
Volumenausbeute: 858 ml
Trockengewicht: 0,473 g pro ml Harz
Massenanteil an Stickstoff: 5,5 Gew. %

### 1.2 Herstellung eines Aminomethylgruppen haltigen monodispersen, makroporösen Perlpolymerisates

### Apparatur: 4 Liter Autoklav, Rührer, Temperaturmessung

Bei Raumtemperatur werden 489 ml voll entsalztes Wasser vorgelegt. Dazu werden 351,5 g 50 gew.-%iger Natronlauge dosiert. Unter Rühren werden 846 ml Harz hergestellt nach Beispiel 3.1. dosiert.

Die Suspension wird auf 180°C erhitzt und weitere 5 Stunden bei dieser Temperatur gerührt. Danach wird die Suspension abgekühlt. Das erhaltene Perlpolymerisat wird über ein Sieb abgetrennt und mit voll entsalztem Wasser neutral gewaschen.
Volumenausbeute: 714 ml
Hochgerechnet auf die Gesamtausbeute an Harz aus VB 1.1: 727 ml
Gesamte gebildete Basenmenge - Produkt aus HCl - Zahl und Gesamtausbeute Harz: 1578 mmol
HCl - Zahl: 2,17 mol/l
Erstsubstitution: 1,14

### Vergleichsbeispiel 2

### 2.1 Herstellung von Anionenaustauschern mit dem Arbeitsmedium 1,2-Dichlorpropan

### Apparatur: 4 Liter Vierhalskolben, Dosiertrichter,Thermometer, Heizbad, Rührer

Bei Raumtemperatur werden 1190 g 1,2-Dichlorpropan vorgelegt. Dazu werden 150 g monodisperses, makroporöses Perlpolymerisat aus Beispiel 1, 268,3 g Phthalimid und 61,4 g Paraformaldehyd (n= 8 bis 100) - 91 gew.-%ig (Rest: Wasser) dosiert. Die Suspension wird 0,5 Stunden bei Raumtemperatur gerührt. Dann wird die Suspension auf 60°C erwärmt. Bei dieser Temperatur wird 1,0 Stunden lang gerührt. Innerhalb von 2 Stunden werden dann bei 60°C 357,6 g Schwefelsäuremonohydrat dosiert. Anschließend rührt die Suspension dann 3 Stunden bei dieser Temperatur. Die warme Reaktionsbrühe wird abgesaugt. Es werden 2 Liter voll entsalztes Wasser dosiert. Destillativ werden Restmengen an 1,2-Dichlorpropan entfernt. Der Ansatz wird danach abgekühlt und das Harzvolumen bestimmt.
Volumenausbeute: 550 ml
Trockengewicht: 0,444 g pro ml Harz
Massenanteil an Stickstoff: 3,4 Gew. %

### 2.2 Herstellung eines Aminomethylgruppen haltigen monodispersen, makroporösen Perlpolymerisates

### Apparatur: 4 Liter Autoklav, Rührer, Temperaturmessung

Bei Raumtemperatur werden 350 ml voll entsalztes Wasser vorgelegt. Dazu werden 148,3 g 50 gew.-%iger Natronlauge dosiert. Unter Rühren werden 526 ml Harz hergestellt nach Beispiel 3.1. dosiert.

Die Suspension wird auf 180°C erhitzt und weitere 5 Stunden bei dieser Temperatur gerührt. Danach wird die Suspension abgekühlt. Das erhaltene Perlpolymerisat wird über ein Sieb abgetrennt und mit voll entsalztem Wasser neutral gewaschen.
Volumenausbeute: 450 ml
Hochgerechnet auf die Gesamtausbeute an Harz aus VB 2.1: 471 ml
Gesamte gebildete Basenmenge - Produkt aus HCl - Zahl und Gesamtausbeute Harz: 593 mmol
HCl - Zahl: 1,26 mol/l
Erstsubstitution: 0,5

**Zusammenfassung der Ergebnisse**

| **Kennzahl der aminomethylierten Stufe** | **1,2-Dichlorethan (Vergleichsbeispiel 1)** | **1,2-Dichlorpropan (Vergleichsbeispiel 2)** | **1,3-Dichlorpropan (Beispiel 1)** |
|---|---|---|---|
| Basenmenge auf dieser Stufe (mmol) | 1578 | 594 | 1675 |
| Substitutionsgrad der aromatischen Kerne mit Aminomethylgruppen | 1,14 | 0,5 | 1,17 |
| HCl - Zahl in mol/l | 2,17 | 1,26 | 2,36 |

Beispiel 1 belegt, dass unter Verwendung von 1,3-Dichlorpropan als Lösungs- und Quellungsmittel der Substitutionsgrad der aromatischen Kerne mit Aminomethylgruppen größer ist, als im Vergleich zu den anderen Lösungs- und Quellungsmitteln, also eine höhere Ausbeute an aminomethylierten Perlpolymerisat erzielt werden kann.

## Patentansprüche

1. Verfahren zur Herstellung von aminomethylierten Perlpolymerisaten, **dadurch gekennzeichnet, dass**
a) Monomertröpfchen aus einem Gemisch enthaltend mindestens eine monoethylenisch ungesättigte, aromatische Verbindung, mindestens eine multiethylenisch ungesättigte Verbindung, mindestens einen Initiator zu einem Perlpolymerisat umgesetzt werden und
b) das Perlpolymerisat aus Schritt a) mit Verbindungen der Formel (I) oder deren Salze 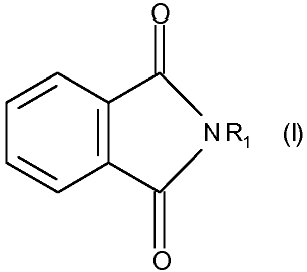 wobei R₁ = C₁-C₃-Alkyl oder H ist und Verbindungen der Formel (II) 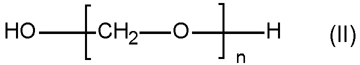 wobei n = 1 bis 100 sein kann,
in Gegenwart von 1,3-Dichlorpropan und
in Gegenwart von Protonensäuren
zu einem phthalimidomethyliertem Perlpolymerisat umgesetzt wird und
c) das pthhalimidomethylierte Perlpolymerisat zu einem aminomethylierten Perlpolymerisat hydrolisiert wird.

2. Verfahren gemäß Anspruch 1, **dadurch gekennzeichnet, dass** in Verfahrensschritt a) als monoethylenisch ungesättigte, aromatische Verbindung Styrol, α-Methylstyrol, Vinyltoluol, Ethylstyrol, t-Butylstyrol, Chlorstyrol, Bromstyrol, Chlormethylstyrol oder Vinylnaphthalin oder Mischungen dieser Verbindungen eingesetzt werden.

3. Verfahren gemäß Anspruch 1 oder 2, **dadurch gekennzeichnet, dass** in Verfahrenschritt a) als multiethylenisch ungesättigte Verbindung Divinylbenzol, Divinyltoluol, Trivinylbenzol, Octadien oder Triallylcyanurat oder Mischungen dieser Verbindungen eingesetzt werden.

4. Verfahren gemäß mindestens einem der Ansprüche 1 bis 3, **dadurch gekennzeichnet, dass** als eine monoethylenisch ungesättigte, aromatische Verbindung Styrol und als multiethylenisch ungesättigte Verbindung Divinylbenzol eingesetzt werden.

5. Verfahren gemäß mindestens einem der Ansprüche 1 bis 4, **dadurch gekennzeichnet, dass** R₁ = H ist.

6. Verfahren gemäß mindestens einem der Ansprüche 1 bis 5, **dadurch gekennzeichnet, dass** n in Verbindung der Formel (II) = 8 bis 100 ist.

7. Verfahren gemäß mindestens einem der Ansprüche 1 bis 6, **dadurch gekennzeichnet, dass** die Menge von 1,3-Dichlorpropan bezogen auf die Gesamtmenge an eingesetzten organischen Lösung- und Quellungsmitteln größer als 90 Gew. % ist.

8. Verfahren gemäß mindestens einem der Ansprüche 1 bis 7, **dadurch gekennzeichnet, dass** die Umsetzung in Schritt b) bei einer Temperatur von 55°C bis 75 °C durchgeführt wird.

9. Verfahren gemäß Anspruch 6, **dadurch gekennzeichnet, dass** das Perlpolymerisat aus Schritt a) und die Verbindungen der Formel (I) und die Verbindungen der Formel (II) zusammengegeben werden und dann die Protonensäure hinzugegeben wird.

10. Verfahren gemäß mindestens einem der Ansprüche 1 bis 9, **dadurch gekennzeichnet, dass** die Verbindungen der Formel (I) in Verfahrensschritt b.) in einer Menge von 3,5 bis 1,7 mol pro Mol Protonensäure eingesetzt werden.

11. Verfahren gemäß mindestens einem der Ansprüche 1 bis 10, **dadurch gekennzeichnet, dass** 1,3-Dichlorpropan in Verfahrensschritt b.) in einer Menge von 3,5 bis 13 mol pro Mol der Verbindungen der Formel (I) eingesetzt wird.

12. Verfahren gemäß mindestens einem der Ansprüche 1 bis 11, **dadurch gekennzeichnet, dass** 1,3-Dichlorpropan in einer Menge von 7,5 bis 13 mol pro Mol Perlpolymerisat in Verfahrensschritt b.) eingesetzt wird.

13. Verfahren gemäß mindestens einem der Ansprüche 1 bis 12, **dadurch gekennzeichnet, dass** Verfahrensschritt c.) mit wässrigen oder alkoholischen Lösungen eines Alkalihydroxids bei Temperaturen zwischen 100°C und 250°C durchgeführt wird.

14. Verfahren gemäß mindestens einem der Ansprüche 1 bis 13, **dadurch gekennzeichnet**, das in Schritt a.) ein Porogen eingesetzt wird und dadurch ein makroporöses, aminomethyliertes Perlpolymerisat erhalten wird.

## Claims

1. Process for preparing aminomethylated bead polymers, **characterized in that**
a) monomer droplets composed of a mixture comprising at least one monoethylenically unsaturated aromatic compound, at least one multiethylenically unsaturated compound and at least one initiator are converted to a bead polymer and
b) the bead polymer from step a) is reacted with compounds of the formula (I) or salts thereof 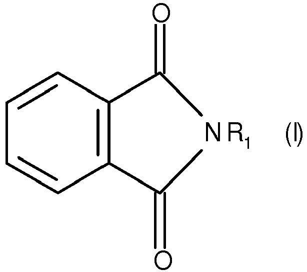 where R₁ = C₁-C₃-alkyl or H and compounds of the formula (II) 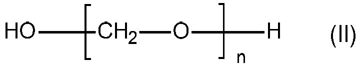 where n = 1 to 100,
in the presence of 1,3-dichloropropane and
in the presence of protic acids
to give a phthalimidomethylated bead polymer and
c) the phthalimidomethylated bead polymer is hydrolyzed to give an aminomethylated bead polymer.

2. Process according to Claim 1, **characterized in that**, in process step a), monoethylenically unsaturated aromatic compounds used are styrene, α-methylstyrene, vinyltoluene, ethylstyrene, t-butylstyrene, chlorostyrene, bromostyrene, chloromethylstyrene or vinylnaphthalene or mixtures of these compounds.

3. Process according to Claim 1 or 2, **characterized in that**, in process step a), multiethylenically unsaturated compounds used are divinylbenzene, divinyltoluene, trivinylbenzene, octadiene or triallyl cyanurate or mixtures of these compounds.

4. Process according to at least one of Claims 1 to 3, **characterized in that** a monoethylenically unsaturated aromatic compound used is styrene and a multiethylenically unsaturated compound used is divinylbenzene.

5. Process according to at least one of Claims 1 to 4, **characterized in that** R₁ = H.

6. Process according to at least one of Claims 1 to 5, **characterized in that** n in compound of the formula (II) = 8 to 100.

7. Process according to at least one of Claims 1 to 6, **characterized in that** the amount of 1,3-dichloropropane, based on the total amount of organic solvents and swelling agents used, is greater than 90% by weight.

8. Process according to at least one of Claims 1 to 7, **characterized in that** the reaction in step b) is conducted at a temperature of 55°C to 75°C.

9. Process according to Claim 6, **characterized in that** the bead polymer from step a) and the compounds of the formula (I) and the compounds of the formula (II) are combined and then the protic acid is added thereto.

10. Process according to at least one of Claims 1 to 9, **characterized in that** the compounds of the formula (I) are used in process step b.) in an amount of 3.5 to 1.7 mol per mole of protic acid.

11. Process according to at least one of Claims 1 to 10, **characterized in that** 1,3-dichloropropane is used in process step b.) in an amount of 3.5 to 13 mol per mole of compounds of the formula (I).

12. Process according to at least one of Claims 1 to 11, **characterized in that** 1,3-dichloropropane is used in an amount of 7.5 to 13 mol per mole of bead polymer in process step b.).

13. Process according to at least one of Claims 1 to 12, **characterized in that** process step c.) is conducted with aqueous or alcoholic solutions of an alkali metal hydroxide at temperatures between 100°C and 250°C.

14. Process according to at least one of Claims 1 to 13, **characterized in that** a porogen is used in step a.) and a macroporous aminomethylated bead polymer is thus obtained.

## Revendications

1. Procédé de fabrication de polymères en perles aminométhylés, **caractérisé en ce que**
a) des gouttelettes de monomères en un mélange contenant au moins un composé aromatique monoéthyléniquement insaturé, au moins un composé multiéthyléniquement insaturé, au moins un initiateur sont mises en réaction pour former un polymère en perles, et
b) le polymère en perles de l'étape a) est mis en réaction avec des composés de formule (I) ou leurs sels 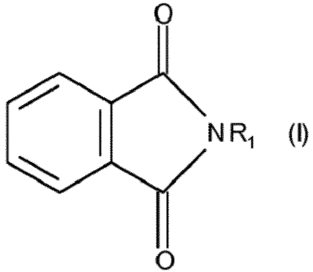 avec R₁ = alkyle en C₁-C₃ ou H, et des composés de formule (II) 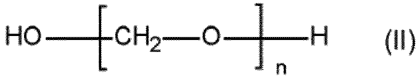 avec n = 1 à 100,
en présence de 1,3-dichloropropane et
en présence d'acides protiques,
pour former un polymère en perles phtalimidométhylé, et
c) le polymère en perles phtalimidométhylé est hydrolysé en un polymère en perles aminométhylé.

2. Procédé selon la revendication 1, **caractérisé en ce qu'**à l'étape de procédé a), du styrène, de l'α-méthylstyrène, du vinyltoluène, de l'éthylstyrène, du t-butylstyrène, du chlorostyrène, du bromostyrène, du chlorométhylstyrène ou de la vinylnaphtaline ou des mélanges de ces composés sont utilisés en tant que composé aromatique monoéthyléniquement insaturé.

3. Procédé selon la revendication 1 ou 2, **caractérisé en ce qu'**à l'étape de procédé a), du divinylbenzène, du divinyltoluène, du trivinylbenzène, de l'octadiène ou du cyanurate de triallyle ou des mélanges de ces composés sont utilisés en tant que composé multiéthyléniquement insaturé.

4. Procédé selon au moins l'une quelconque des revendications 1 à 3, **caractérisé en ce que** du divinylbenzène est utilisé en tant que composé aromatique monoéthyléniquement insaturé et du divinylbenzène en tant que composé multiéthyléniquement insaturé.

5. Procédé selon au moins l'une quelconque des revendications 1 à 4, **caractérisé en ce que** R₁ = H.

6. Procédé selon au moins l'une quelconque des revendications 1 à 5, **caractérisé en ce que** n dans le composé de formule (II) = 8 à 100.

7. Procédé selon au moins l'une quelconque des revendications 1 à 6, **caractérisé en ce que** la quantité de 1,3-dichloropropane par rapport à la quantité totale de solvants et d'agents gonflants organiques utilisés est supérieure à 90 % en poids.

8. Procédé selon au moins l'une quelconque des revendications 1 à 7, **caractérisé en ce que** la réaction à l'étape b) est réalisée à une température de 55 °C à 75 °C.

9. Procédé selon la revendication 6, **caractérisé en ce que** le polymère en perles de l'étape a) et les composés de formule (I) et les composés de formule (II) sont réunis, puis l'acide protique est ajouté.

10. Procédé selon au moins l'une quelconque des revendications 1 à 9, **caractérisé en ce que** les composés de formule (I) sont utilisés à l'étape de procédé b) en une quantité de 3,5 à 1,7 moles par mole d'acide protique.

11. Procédé selon au moins l'une quelconque des revendications 1 à 10, **caractérisé en ce que** le 1,3-dichloropropane est utilisé à l'étape de procédé b) en une quantité de 3,5 à 13 moles par mole des composés de formule (I).

12. Procédé selon au moins l'une quelconque des revendications 1 à 11, **caractérisé en ce que** le 1,3-dichloropropane est utilisé à l'étape de procédé b) en une quantité de 7,5 à 13 moles par mole de polymère en perles.

13. Procédé selon au moins l'une quelconque des revendications 1 à 12, **caractérisé en ce que** l'étape de procédé c) est réalisée avec des solutions aqueuses ou alcooliques d'un hydroxyde alcalin à des températures comprises entre 100 °C et 250 °C.

14. Procédé selon au moins l'une quelconque des revendications 1 à 13, **caractérisé en ce qu'**à l'étape a), un porogène est utilisé et un polymère en perles aminométhylé macroporeux est ainsi obtenu.
